# EUROPEAN PATENT APPLICATION

(11) **EP 4 703 568 A1**
(43) Date of publication of application: **04.03.2026**
(21) Application number: 25199132.9
(22) Date of filing: 29.08.2025
(51) Int. Cl.: F01D 21/00, F01D 17/02, B64D 45/00, F01D 21/14, G01M 15/14

(54) **METHOD OF MONITORING A FOREIGN OBJECT DAMAGE EVENT IN AN AIRCRAFT ENGINE**

(30) Priority: 29.08.2024 IN 202411065362
(71) Applicant: PRATT & WHITNEY CANADA CORP., Longueuil, Québec J4G 1A1 (CA)
(72) Inventor: PENNAPAREDDY, Swathi, (01BE5) Longueuil, J4G 1A1 (CA); FANG, Jing, (01BE5) Longueuil, J4G 1A1 (CA)
(74) Representative: Dehns

(57) **Abstract**

A method of monitoring operation of an aircraft engine (10) includes, during operation of the aircraft engine (10), monitoring a vibration parameter (110) associated with the aircraft engine (10) and monitoring (114) a performance parameter associated with the aircraft engine (10). In response to determining that one or more values of one of the vibration parameter and the performance parameter are indicative of foreign object damage (FOD) to the aircraft engine (10), determining whether one or more values of the other one of the vibration parameter and the performance parameter are indicative of FOD to the aircraft engine. In response to determining that the one or more values of both the vibration parameter and the performance parameter are indicative of FOD to the aircraft engine (10), registering (122) a confirmed occurrence of FOD to the aircraft engine in a non-transitory memory (414) associated with the aircraft engine.

## Description

### TECHNICAL FIELD

The invention relates generally to a method of operating an aircraft engine and, more particularly, to foreign object damage (FOD) monitoring and detection.

### BACKGROUND OF THE ART

One challenge in the design and operation of aircraft engines is the management of what became commonly referred to as "foreign object damage", "foreign object debris" or simply FOD. FOD may have various effects on the operation of an aircraft engine, and these effects may be considered as having a lower or higher level of severity based on various considerations. There always remains room for improvement in an effort to reduce frequency of inspections and unscheduled downtime due to foreign object damage (FOD).

### SUMMARY

In one aspect of the invention, there is provided a method of monitoring operation of an aircraft engine in an aircraft, the method comprising: during operation of the aircraft engine, monitoring a vibration parameter associated with the aircraft engine; during the operation of the aircraft engine, monitoring a performance parameter associated with the aircraft engine; in response to determining that one or more values of one of the vibration parameter and the performance parameter are indicative of foreign object damage (FOD) to the aircraft engine, determining whether one or more values of the other one of the vibration parameter and the performance parameter are indicative of FOD to the aircraft engine; and in response to determining that the one or more values of both the vibration parameter and the performance parameter are indicative of FOD to the aircraft engine, registering a confirmed occurrence of FOD to the aircraft engine in a non-transitory memory associated with the aircraft engine.

The method as defined above and described herein may further include one or more of the following steps and/or features, in whole or in part, and in any combination.

In certain aspects, the method includes registering a false-positive occurrence of an FOD event in the non-transitory memory in response to determining that the one or more values of one of the vibration parameter and the performance parameter are not indicative of an FOD event.

In certain aspects, the method includes registering the false-positive of the FOD event further includes editing specifications for the FOD event in a manner to exclude the respective one or more values from meeting the specifications.

In certain aspects, the method includes communicating the confirmed occurrence of FOD to the aircraft engine over a wireless signal to a device accessible by a crew member of the aircraft.

In certain aspects, the method includes communicating the confirmed occurrence of FOD to the aircraft engine over a wireless signal to a ground station.

In certain aspects, the method includes updating a digital engine model of the aircraft engine based on the one or more values of the vibration parameter and/or the one or more values of the performance parameter.

In certain aspects, said monitoring the vibration parameter includes receiving the one or more values from an accelerometer.

In certain aspects, said monitoring the performance parameter includes receiving the one or more values from one or more of: a pressure sensor; a torque sensor; and a temperature sensor.

In another aspect of the invention, there is provided an aircraft engine comprising: a first sensor operable to measure a value of a vibration parameter; a second sensor operable to measure a value of a second parameter; a controller including a processor and a non-transitory machine-readable memory operatively connected to the processor, and storing:
first specifications for the vibration parameter, the first specifications being indicative of a foreign object damage (FOD) event; and instructions executable by the processor to cause the processor to: determine whether the value of the vibration parameter meets the first specifications; in response to determining that the vibration parameter meets the first specification, determine whether the value of the second parameter meets second specifications, the second specifications being for the second parameter and indicative of the FOD event; and in response to the value of the second parameter meeting the second specifications, communicate the FOD event.

The aircraft engine as defined above and described herein may further include one or more of the following features, in whole or in part, and in any combination.

In certain aspects, the instructions are further operable to cause the processor to dismiss the FOD event when the one or more values of the second parameter does not meet the second specifications.

In certain aspects, said instructions causing the processor to dismiss the FOD event further include instructions to edit the first specifications in a manner to exclude one or more values of the vibration parameter from meeting the first specifications.

In certain aspects, the instructions are further operable to obtain the second specifications including performing a simulation of the FOD event using a digital engine model of the aircraft engine, based on operating conditions of the aircraft engine when said one or more values of the second parameter are measured.

In certain aspects, the instructions are further operable to cause the processor to shut down the engine when the one or more values of the second parameter meets the second specifications.

In certain aspects, the second parameter is a performance parameter and the second sensor includes one or more of: a pressure sensor; a torque sensor; and a temperature sensor.

In certain aspects, the second parameter is a lidar parameter and the second sensor is a lidar unit.

### BRIEF DESCRIPTION OF THE DRAWINGS

Reference is now made to the accompanying figures in which:
Fig. 1 is a schematic cross-sectional view of an aircraft engine;
Fig. 2 is a block diagram of the aircraft engine of Fig. 1;
Fig. 3 is a flow chart of a method of operating the aircraft engine of Fig. 1;
Fig. 4 is a schematic cross-sectional view of another example of an aircraft engine;
Fig. 5 is a block diagram of the aircraft engine of Fig. 4;
Fig. 6 is a flow chart of a method of operating the aircraft engine of Fig. 4; and
Fig. 7 is a block diagram of a computer.

### DETAILED DESCRIPTION

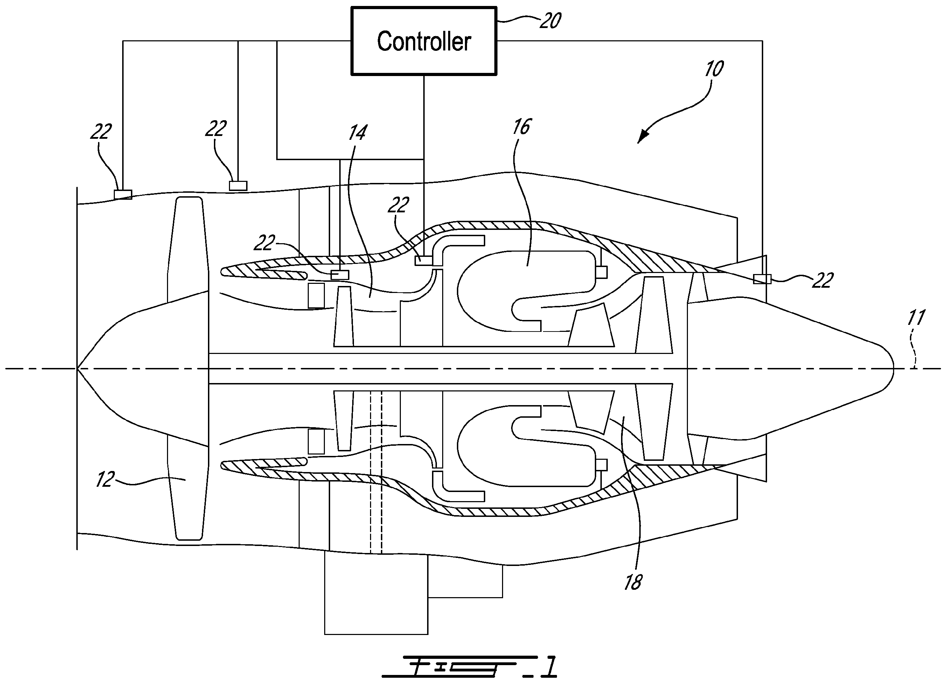

Fig. 1 illustrates an aircraft engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases around the engine axis 11, and a turbine section 18 for extracting energy from the combustion gases.

In the embodiment presented in Fig. 1, the aircraft engine 10 is presented as one possible example of aircraft engine, which is specifically of the turbofan engine type in this example. Other types of aircraft engines include turboprop, turboshaft, auxiliary power units, and hybrid aircraft engines which can combine one or more electric machines to one or more heat engines, to name some examples. A method of operating an aircraft engine such as described below can apply to turbofan engines, other types of aircraft engines referred to above, or yet other types of engines depending on the embodiment.

Aircraft engines are subject to occurrences of "foreign object damage", sometimes referred to as "foreign object debris" or "FOD", for short. FOD refers to the presence of one or more solid objects which comes to occupy a location from which it was absent at the time of engine design or engine delivery, and which may affect engine performance. FOD may come from an external source, such as a bird or other foreign object being aspired into an air breathing engine. FOD may come from an internal source, such as a cracked blade portion, loosened fastener, broken gasket, or other component which was initially part of the engine itself, and which may have become displaced from its original, intended configuration at a given point during operation of the aircraft engine, such as may occur due to a variety of reasons.

Confirmed or potential occurrences of FOD events may need to be taken into consideration in association with an engine maintenance schedule. While on one hand, it can be desired to perform maintenance more frequently in a manner to address the potential effects of FOD on aircraft engine operation, on the other hand, performing maintenance is associated to both maintenance costs, and to engine (and aircraft) downtime, which engine owners typically wish to minimize while meeting all requirements associated to good engine performance.

An aircraft engine 10 can have a controller 20. An aircraft engine 10 can have a plurality of sensors 22 which may be used by the controller 20 to acquire (e.g., measure) values of one or more parameters, which can evolve over time such as during different segments of the engine's operating envelope. For example, a lidar unit, camera, or other sensor type may be used to monitor a lidar parameter by measuring one or more values associated to one or more parameters associated to detecting a presence or a passage of foreign object damage (FOD) in one or more air flow areas of the aircraft engine 10. Alternately, or concurrently, a lidar unit, camera, or other sensor type may be used to measure one or more values associated to one or more parameters associated to one or more dimensions or one or more tridimensional images of one or more internal portions of the aircraft engine 10. As another example, one or more performance sensors, such as one or more temperature, torque, and/or pressure sensors may be used to monitor a performance parameter by measuring one or more values of one or more parameters of temperature and/or pressure at one or more areas of the aircraft engine 10. As yet another example, one or more vibration sensors (e.g., accelerometer) may be used to monitor a vibration parameter by measuring values of one or more parameters associated to vibrations at one or more areas of the aircraft engine 10, such as an amplitude spectrum of vibrations spanning a given frequency band, at one or more locations of the aircraft engine 10 for instance. Building on this explanation, sensors 22 can be used to measure one or more values of various parameters such as dimensions, tridimensional geometry, FOD detection, temperature, pressure, amplitude and/or frequency of vibration, etc. Sensors 22 can provide outputs which can be received as inputs by the controller 20.

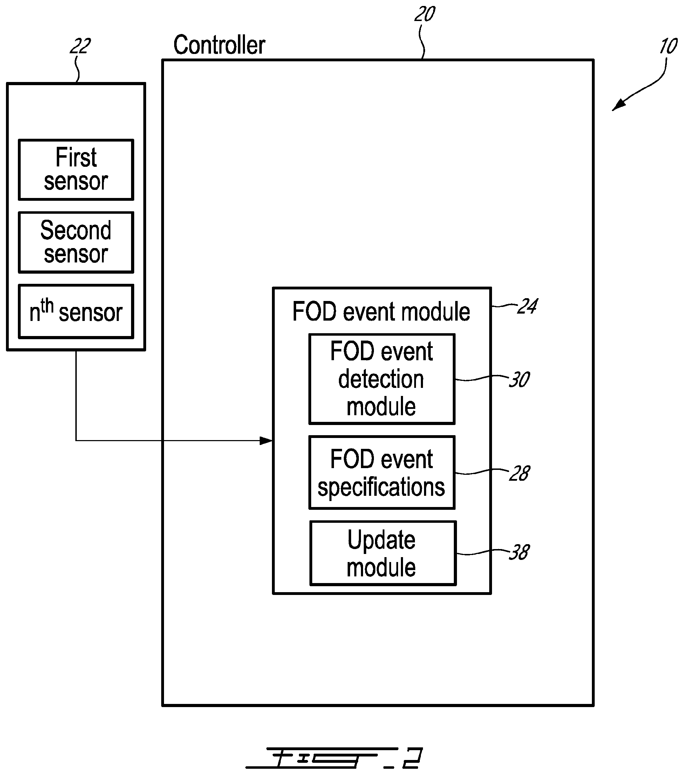

An example controller 20 is presented in greater detail in Fig. 2. The controller 20 can include one or more computers and be operable to perform functions. The functions may be performed in an individual manner by a single computer, or in a collaborative manner between more than one computer or processor. The functions can be enabled by hardware, or by a combination of hardware and software. The hardware, or combination of hardware and software associated to individual functions will be referred to as modules in this specification for ease of reference.

In the example presented in Fig. 2, the controller 20 have a group of functions which will be referred to as the FOD event module 24. Some of the underlying functions are optional and shown to provide one of various possible examples. The FOD event module 26 will now be detailed for illustrative purposes.

The FOD event module 24 can include definitions of FOD events. These definitions of FOD events may be referred to herein as FOD event specifications 28. Different FOD event specifications 28, based on different parameters, can be associated to detection of a same FOD event. Different FOD event specifications 28 can be associated to a same FOD event type, but of different severity levels.

As a first example, a vibration amplitude above a certain threshold within a given frequency band at a given location on the engine may form the basis of an FOD event detection based on specifications for a first parameter associated to values measured by an accelerometer. Specifications can be set based on a specific range of values, or as a specific threshold value (e.g., maximum, minimum) for instance. In such cases, the first parameter may be a vibration parameter. Similarly, detection of the passage of an object having a size above a certain size threshold by a lidar unit of the aircraft engine 10 may form the basis of an associated FOD event detection based on specifications set for a second parameter associated to values measured by the lidar unit. In such cases, the second parameter can be a lidar parameter. Alternately, specifications can be set in a manner to factor in the evolution of the one or more values over time. For example, a performance indicator, such as a given temperature or pressure remaining above or below an associated threshold at a given location on the engine, for a given period of time, in a given engine operating condition, may form the basis of yet another FOD event detection based on specifications for a second parameter, associated to values measured over time by one or more pressure sensors and/or one or more temperature sensors. In such cases, the second parameter may be a performance parameter. Alternately, the performance parameter can be the first parameter, and the vibration parameter can be the second parameter.

A FOD event detector module 30 can provide one or more functions associated to the detection of FOD event. More specifically, the FOD event detector module 30 can have one or more functions. Each of the one or more functions can compare one or more measured values to a corresponding specification, and determine, based on this comparison, whether the one or more values meets the specification or not. The scenario where the one or more values meets the specification can be considered an alert concerning an FOD event, or a suspected FOD event. The alert may be representative of a certain likelihood that an occurrence of a FOD event which would need to be registered and/or communicated has occurred. However, there may remain a certain likelihood that the FOD event suspected has not indeed occurred, such as by not having generated an effect deemed relevant. Accordingly, it may be preferred to validate the FOD event before communicating its existence, and to dismiss it, such as by registering it as a false-positive, not registering it and/or communicating it, if it is not validated. Accordingly, a confirmed occurrence of FOD to the aircraft engine, or a false-positive occurrence of the FOD event, can be registered in a non-transitory memory associated to the aircraft engine. This functionality will be detailed further below.

Either one, or more, of the FOD event specifications 28, which are associated to values which are measurable by the sensors 22, can be constantly, sporadically, or regularly updated based on values measured by one or more of the sensors 22. The FOD event specifications 28 can alternately be updatable based on other inputs than the sensors 22, such as data received in a wired or wireless manner from the engine owner, for instance.

It will be noted that similarly to the way a human brain can acquire partial representations of the surrounding environment based on various sensory organs which each only perceive part of the overall picture, the sensors can acquire partial representations of the aircraft engine, or of various of its operating conditions, and provide associated outputs which can be used by the controller 20 to validate the current state of the aircraft engine 10 and/or to build one or more partial virtual representations of the aircraft engine which can be referred to as digital engine models. As an example, a lidar unit may detect a change in the geometry of a portion of a gas path conduit of the aircraft engine 10, such as the presence of a dent or fold, and may update a geometrical representation of the aircraft engine 10 forming part of the digital engine model to reflect the presence of this dent or fold going forward. Such a dent or fold may have a certain effect on engine performance going forward. A computerized simulation can be performed to simulate changes in engine operating conditions based on one or more hypothesis. For instance, a computerized simulation of engine performance in given operating conditions can be based on a tridimensional model including such as dent or fold, and associated performance indicators measured with one or more of the sensors 22 may then be used to determine whether the aircraft engine 10 is indeed behaving as simulated.

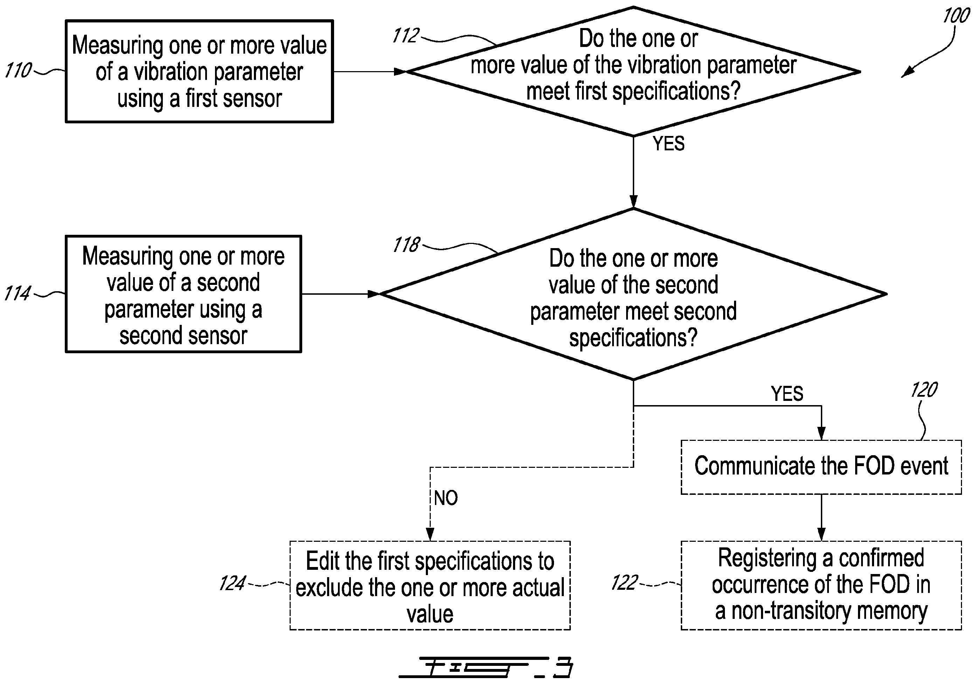

Referring to Fig. 3, an example method 100 of operating an aircraft engine 10 is presented. The method 100 includes measuring 110 one or more values of a first parameter using a first sensor. The method 100 includes determining 112 whether the one or more values of the first parameter meets first specifications for the first parameter, the first specifications being indicative of a FOD event. The method 100 includes measuring 114 one or more values of a second parameter, different from the first parameter, using a second sensor. When the one or more values of the first parameter meet the first specifications, the method 100 can include determining 118 whether the one or more values of the second parameter meet the second specifications. An occurrence of the FOD event can be communicated 120 only when the one or more values of the second parameter is determined to meet the second specifications. The occurrence of the FOD event can be communicated with more or less detailed information about the FOD event which is deemed to have occurred, depending on the embodiment. The FOD event can be dismissed when the one or more values of the second parameter does not meet the second specifications.

Indeed, the correspondence between the one or more values of the first parameter and the first specifications can represent a first indication, or alert, of the potential FOD event. However, there may remain a certain amount of ambiguity as to whether or not the FOD event has indeed occurred. There can be a correlation between the potential FOD event raised by the first indication, on the basis of the first parameter, and specifications concerning the second parameter. A second indication, or confirmation, of the FOD event can then be achieved by comparing the one or more values of the second parameter to the second specifications. The FOD event can be considered to have occurred only when confirmed by the second indication. The FOD event can be communicated, e.g., to pilots and/or in a manner to affect the maintenance schedule, only if confirmed by the second indication, and/or one or more additional indications.

In some embodiments, some or all of the values measured by the sensors can transit across a temporary memory in a first-in, first out basis, and be allowed to be replaced with fresher values when the FOD event is dismissed. In such embodiments, the values associated to a FOD event (such as values pertaining to one or more of the specifications, or all values) can instead be stored 122 to non-transitory memory, in a manner allowing reliable later retrieval, when the FOD event is confirmed. The first indication can be dismissed when not confirmed by the second indication. In some cases, when the first indication is dismissed, the first specifications can be edited 124 in a manner to exclude the one or more values of the first parameter, in a manner for the one or more values of the first parameter to no longer raise an alarm going forward. The function associated to such edition 124 of the first specifications can be referred to herein as the update module 38 of the FOD event module 24.

To better illustrate the method 100, some examples will now be presented.

In accordance with a first example, one or more accelerometers may send a signal including one or more values of a first parameter which may be indicative of an impact, which may be compared to first specifications. The first specifications may specify a range or threshold for values of one or more accelerometers, a deviation from a reference value, etc. If the values acquired from the one or more accelerometers meets the specifications which are considered to define a given FOD event, the FOD event can become suspected, and a confirmation process can be initiated to confirm or infirm the suspicion.

Indeed, the suspected FOD event may be associated to specifications concerning one or more other parameters than the one which raised the suspicion. For instance, the presence of an object above a certain size can be considered likely to affect performance of the aircraft engine in a certain way, in operating conditions which can be sensed using a given set of sensors 22 of the aircraft engine 10. What may be relevant to the operation of the aircraft engine 10 may be the potential consequence of an impact of a certain of a certain amplitude on the performance of the aircraft engine 10 than the detection of the vibrations in and of itself. Indeed, in some cases, impacts objects of a certain size and at a certain speed may end up significantly affecting engine performance, whereas in others, they may end up becoming "digested" by the engine without significantly impairing or affecting performance. Accordingly, the FOD event may be alternately defined in terms of the effects of performance in second specifications. For such reasons, it may be preferred to communicate the FOD event only when the FOD event is confirmed by measured values compared against such second specifications.

More specifically, the presence of an impact above a certain amplitude can be considered likely to affect pressure and/or temperature at one or more locations of the aircraft engine 10 in a certain way, which can be referred to herein as the second specification. Alternately, an impact above a certain amplitude can be associated to the detection of the passage of an object of a certain size by a lidar unit. These second specifications can be defined in, and retrieved from, a digital engine model. Once the second specifications have been obtained from the digital engine model, the verification process can be initiated to see if the one or more values acquired in association with the second parameter meets the second specifications.

For instance, pressure and/or temperature can be measured and compared to what a virtual model of the engine deems would be expected in the case where the engine performance was negatively affected by the presence of FOD suspected from the first indication. If the engine performance is indeed affected in this way, the FOD event can be considered to have been confirmed, and information pertaining to the FOD event, such as an indication of a confirmed occurrence of the FOD event, and potentially further details about the FOD event, may be communicated to the pilot, crew, and/or additional parties. Different ranges of values or thresholds can be associated to a same type of FOD event of different severity levels. In a case where a FOD event of high severity is detected, engine shutdown procedures may automatically be triggered. Depending on the FOD event, the communication may be used to schedule maintenance or to expedite an already scheduled maintenance. In some cases, the confirmation of the FOD event can also trigger the storing of more data, which may include, for instance, the one or more values of the first parameter and/or the one or more value of the second parameter, in a non-transitory memory for later retrieval and/or analysis. If, on the other hand, the engine performance rather appears unaffected, or the risk considered to be associated with the suspected FOD event can otherwise be evacuated, the suspicion of the FOD event may be dismissed. In some cases, it can be preferred to adjust the first specifications when the suspicion of the FOD event is dismissed, to avoid repeating the confirmation steps unnecessarily.

In another example, a certain amplitude of vibration in a certain frequency band at a given location in the aircraft engine 10 may be associated to a FOD event such as broken fan blade or broken compressor blade, for instance. Detecting vibration in excess of a given threshold, in the corresponding frequency band and the corresponding location, can correspond to a scenario where the one or more values of the first parameter meets the first specifications, and raises a suspicion of the corresponding FOD event. The suspected FOD event can be tied to specifications concerning a second parameter, such as perhaps a change in dimensions or geometry in a portion of the gas path which may be detectable using the lidar unit. For instance, if a blade portion has indeed broken off, it may be stuck in a certain portion of the gas path(s) of the engine, and cause a change in the local geometry in a manner which may be specified in second specifications. The signal from the lidar unit can thus be used to determine whether or not the geometry corresponds to what is specified in the second specifications. If the geometry has indeed deviated from the baseline geometry indicated in the digital twin by a certain extent, the suspected FOD event can be considered to be confirmed. Otherwise, the suspicion of the FOD event may be dismissed.

In yet another example, the second parameter can concern exhaust gas temperature, for instance. Second specifications can specify a certain range of exhaust gas temperature in current operating conditions of the aircraft engine. The first sensor can be an exhaust gas temperature sensor. If the value of the exhaust gas temperature sensor is determined to fall within the first specification, a FOD event may be suspected. First specifications can specify a certain vibration signature, which may be associated to the type of FOD event being suspected. One or more performance sensors, and/or one or more LIDAR units, may then be interrogated to confirm whether the associated one or more values of the second parameter fall within the second specifications. In the case where they do fall within the second specifications, the FOD event may be confirmed. In the case where they do not fall within the second specifications, the suspicion of the FOD event may be dismissed. Alternately, the exhaust gas temperature can serve as the first parameter, and the vibration parameter can serve as the second parameter, for confirmation.

In some cases, the second specifications may be calculated based on a simulation. For instance, one or more sensors 22 can provide values for one or more parameters indicative of current operating conditions of the aircraft engine 10. The a virtual model of the engine may include information pertaining to an exact geometry of the aircraft engine 10 (including, say, a dent in a duct detected using a lidar unit which deviates from the "as shipped" geometry), and the expected engine performance may, to a certain degree, be affected by the exact geometry of the aircraft engine 10. The simulation can calculate values associated to the second parameter based on the sensed current operating conditions, and based on the exact geometry information. Accordingly, the first and/or second specifications may be specific to a very specific engine (e.g., serial no), as opposed to being generic to an engine make and model. Similarly, some performance or vibration characteristics, to name two examples, may differ to a certain extent between engines of a given make and model. Such variability can be associated to variations within dimensional tolerances during construction or repurposing, and/or due to factors such as wear over the life of the engine. The virtual model of the engine can have one or more components which may reflect such performance or vibration characteristics of individual engines. Using a more individualized virtual model of the engine as a source of the second specifications may allow to achieve a higher level of accuracy in diagnosing a given FOD event than if using data pertaining generically to a make and model of an engine.

Depending on the embodiment, the first and/or the second specifications do not necessarily refer to instantaneous values. In some embodiments, the first and/or the second specification may rather specify an evolution of one or more values of an associated (one or more) parameter over time.

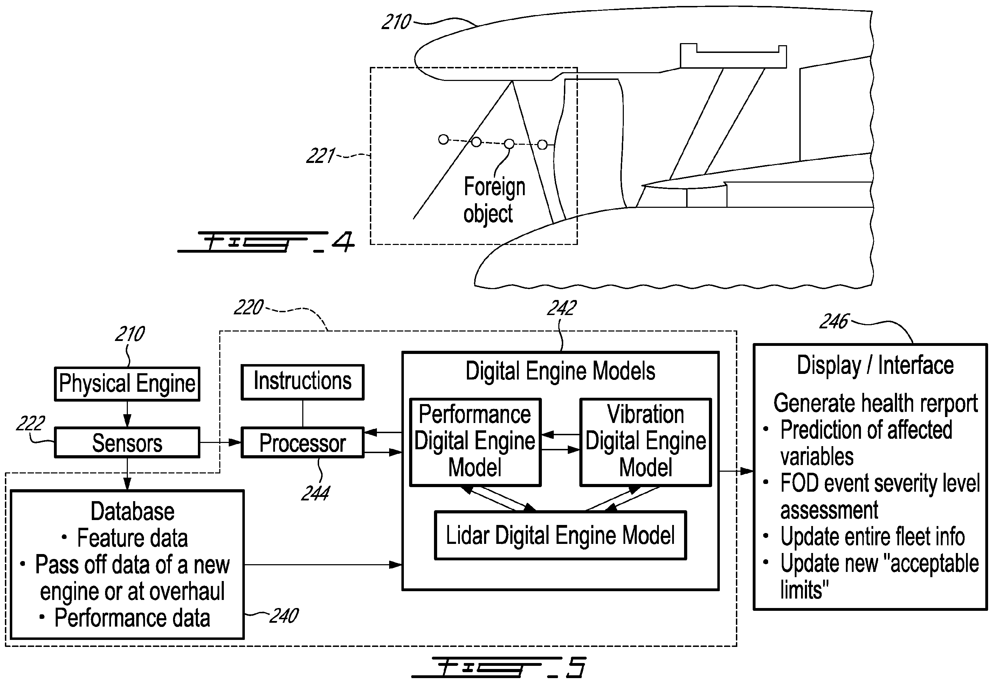

Fig. 4 presents an example of an engine 210 having an FOD detection system 221 including a lidar sensor. The FOD detection system 221 may be used to detect the presence of foreign objects in the gas path. However, the FOD sensitivity may be limited, and some smaller particles or objects or dents may not be detectable by the FOD detection system 221. Moreover, the FOD detection system 221 may generate false alarms.

Turning now to Fig. 5, a block diagram of one example embodiment is presented. The physical engine 210 has sensors 222 (which can include the FOD detection system 221) and a controller 220. The controller 220 can have one or more non-transitory memories storing data such as a database 240 which may include baseline data such as feature data, pass-off data of new or as-overhauled engine, and/or performance data, and a digital engine model 242. In this example, the digital engine model 242 includes three digital engine models, including a performance digital engine model, a vibration digital engine model, and a lidar digital engine model. Data from the sensors 222 can be fed to the database 240 and/or to a processor 244. The processor 244 can communicate with the digital engine model 242. The controller 220 may be operatively connected to a display / interface 246. The digital engine model 242 can be a pre-built model of the physical engine 210 which contains information of conditions of the engine, geometry/features, and performance metrics of the engine model. The model can understand geometric details of the individual engine such as mild folds or small dents. The digital engine model 242 can use artificial intelligence (AI) and deep learning (DL) to be continuously updated with real-time data.

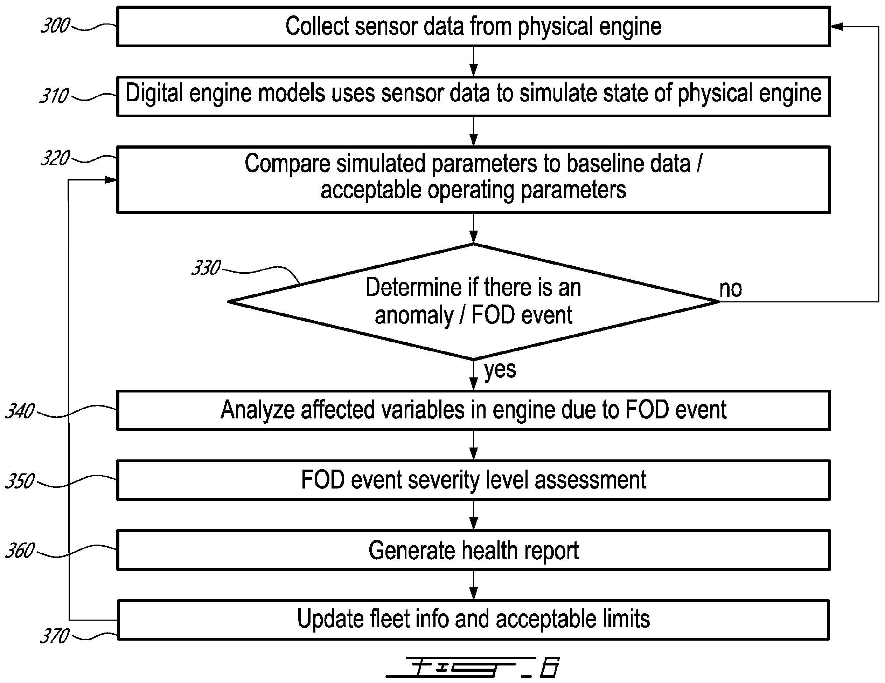

As shown in greater detail in Fig. 6, the sensors 222 can be placed on the physical engine 210 and continuously transfer 300 health monitoring data from the physical engine 210 to the digital engine model 242 and corresponding processor(s). The sensor data can include vibration data, lidar data, performance data, etc. The digital engine model 242 can process the sensor data and compare it to baseline data or past cases in the database 240, to simulate 310 the operating parameters. The digital engine model 242 can simulate 310 immediately acquired data or if flight data has changed significantly, can pull data from the database 240. Each type of digital engine model 242 can simulate 310 the corresponding parameters and data (e.g., vibration digital engine model can simulate the vibration data and the vibrational state of the physical engine). The digital engine model 242 can be compared 320 to baseline data and past cases to determine 330 if an anomaly or FOD event has occurred. If an FOD event is detected, the digital engine model 242 can estimate clearances and variables that are affected by each FOD event. One or more digital engine models 242 can be used and analyzed 340 to determine variables affected by the suspected event (e.g., if an anomaly is detected in the lidar digital engine model, the performance digital engine model can be checked for confirmation of the anomaly). The severity level can be assessed 350 or classified. The controller 220 can then generate 360 and output a health report. The health report may include affected variables, severity level of the FOD event, whether the physical engine 210 is still acceptable for use, etc. Data in the health report can be communicated to an external database where fleet info and acceptable limits may be updated. In other words, if acceptable limits are edited locally to adapt to a situation which initially raised an alarm and which was thereafter dismissed, the acceptable limits of other engines of the same model in the fleet may be updated 370 as well. Alternately, if specifications which initially do not raise an alarm are found to be tied to an event, the specifications can be updated so as to raise an alarm in the future in the same, or other engines of the fleet. The digital engine model 242 can allow for higher sensitivity in FOD detection, allowing for analyses of the effects of minor events such as minor dents, dust, etc.

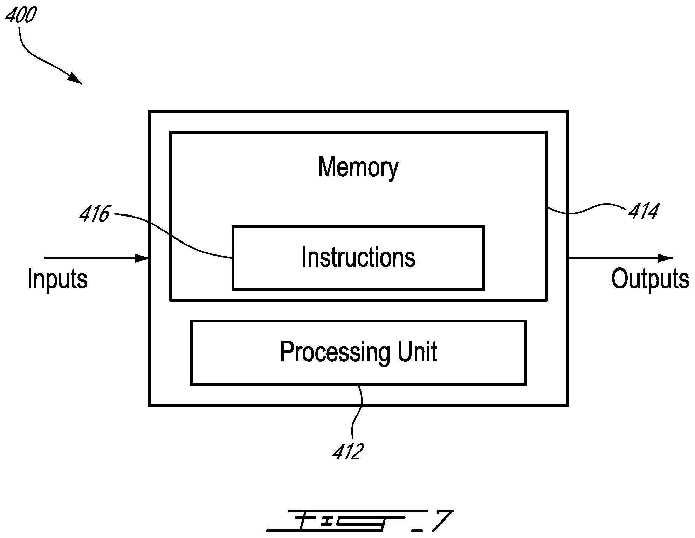

Referring to Fig. 7, it will be understood that the expression "computer" 400 as used herein is not to be interpreted in a limiting manner. It is rather used in a broad sense to generally refer to the combination of some form of one or more processing units 412 and some form of memory system 414 accessible by the processing unit(s). The memory system 414 can be of the non-transitory type. The use of the expression "computer" 400 in its singular form as used herein includes within its scope one or more processing units 412 working to perform a given function.

The computer(s) 400 or computing devices of the controller 20, 220, may be the same or different types of devices. Note that the controller 20, 220 can be implemented as part of a full-authority digital engine controls (FADEC) or other similar device, including electronic engine control (EEC), engine control unit (ECU), electronic propeller control, propeller control unit, and the like. In some embodiments, the controller is implemented as a Flight Data Acquisition Storage and Transmission system, such as a FASTTM system. The controller may be implemented in part in the FASTTM system and in part in the EEC. Other embodiments may also apply.

The computer(s) 400 comprises a processing unit 412 and a memory 414 which has stored therein computer-executable instructions 416. The processing unit 412 may comprise any suitable devices configured to implement a method such that instructions, when executed by the computer(s) or other programmable apparatus, may cause the functions/acts/steps performed to control the mode of operation of the engine to be executed. The processing unit may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 414 may comprise any suitable known or other machine-readable storage medium. The memory 414 may comprise non-transitory computer readable storage medium, for example, but not limited to, an electronic, magnetic, optical, electromagnetic, infrared, or semiconductor system, apparatus, or device, or any suitable combination of the foregoing. The memory 414 may include a suitable combination of any type of computer memory that is located either internally or externally to device, for example random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. Memory 414 may comprise any storage means (e.g., devices) suitable for retrievably storing machine-readable instructions 416 executable by processing unit 412.

The methods and systems for controlling the engine described herein may be implemented in a high level procedural or object oriented programming or scripting language, or a combination thereof, to communicate with or assist in the operation of a computer system, for example the computer(s). Alternatively, the methods and systems may be implemented in assembly or machine language. The language may be a compiled or interpreted language. Program code for implementing the methods and systems may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems may also be considered to be implemented by way of a non-transitory computer-readable storage medium having a computer program stored thereon. The computer program may comprise computer-readable instructions which cause a computer, or more specifically the processing unit of the computing device, to operate in a specific and predefined manner to perform the functions described herein.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

While the description may present method and/or process steps as a particular sequence, it is understood that to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus. As used herein, the term "about" is intended to allow for a 10% variation of the associated numerical values.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Other applications would be recognized by the person of ordinary skill in the art and are considered to be within the scope of the present disclosure. Yet further modifications could be implemented by a person of ordinary skill in the art in view of the present disclosure, which modifications would be within the scope of the present technology.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A method of monitoring operation of an aircraft engine (10) in an aircraft, the method comprising:
during operation of the aircraft engine, monitoring a vibration parameter associated with the aircraft engine;
during the operation of the aircraft engine, monitoring a performance parameter associated with the aircraft engine;
in response to determining that one or more values of one of the vibration parameter and the performance parameter are indicative of foreign object damage (FOD) to the aircraft engine, determining whether one or more values of the other one of the vibration parameter and the performance parameter are indicative of FOD to the aircraft engine; and
in response to determining that the one or more values of both the vibration parameter and the performance parameter are indicative of FOD to the aircraft engine, registering a confirmed occurrence of FOD to the aircraft engine in a non-transitory memory (414) associated with the aircraft engine.

2. The method of claim 1, further comprising registering a false-positive occurrence of an FOD event in the non-transitory memory in response to determining that the one or more values of one of the vibration parameter and the performance parameter are not indicative of an FOD event.

3. The method of claim 2, wherein registering the false-positive of the FOD event further includes editing specifications for the FOD event in a manner to exclude the respective one or more values from meeting the specifications.

4. The method of any preceding claim, further comprising communicating the confirmed occurrence of FOD to the aircraft engine over a wireless signal to a device accessible by a crew member of the aircraft.

5. The method of any preceding claim, further comprising communicating the confirmed occurrence of FOD to the aircraft engine over a wireless signal to a ground station.

6. The method of any preceding claim, further comprising updating a digital engine model (242) of the aircraft engine based on the one or more values of the vibration parameter and/or the one or more values of the performance parameter.

7. The method of any preceding claim, wherein said monitoring the vibration parameter includes receiving the one or more values from an accelerometer.

8. The method of any preceding claim, wherein said monitoring the performance parameter includes receiving the one or more values from one or more of: a pressure sensor; a torque sensor; and a temperature sensor.

9. An aircraft engine (10) comprising:
a first sensor (222) operable to measure a value of a vibration parameter;
a second sensor (222) operable to measure a value of a second parameter; and
a controller (20; 220) including a processor (244) and a non-transitory machine-readable memory (414) operatively connected to the processor, the non-transitory machine-readable memory (414) configured to store:
first specifications for the vibration parameter, the first specifications being indicative of a foreign object damage (FOD) event; and
instructions executable by the processor to cause the processor to:
determine whether the value of the vibration parameter meets the first specifications;
in response to determining that the vibration parameter meets the first specification, determine whether the value of the second parameter meets second specifications, the second specifications being for the second parameter and indicative of the FOD event; and
in response to the value of the second parameter meeting the second specifications, communicate the FOD event.

10. The aircraft engine of claim 9, wherein the instructions are further operable to cause the processor to dismiss the FOD event when the one or more values of the second parameter does not meet the second specifications.

11. The aircraft engine of claim 10, wherein said instructions causing the processor to dismiss the FOD event further include instructions to edit the first specifications in a manner to exclude one or more values of the vibration parameter from meeting the first specifications.

12. The aircraft engine of any of claims 9 to 11, wherein the instructions are further operable to obtain the second specifications including performing a simulation of the FOD event using a digital engine model (242) of the aircraft engine (10), based on operating conditions of the aircraft engine when said one or more values of the second parameter are measured.

13. The aircraft engine (10) of any of claim 9 to 12, wherein the instructions are further operable to cause the processor to shut down the aircraft engine when the one or more values of the second parameter meets the second specifications.

14. The aircraft engine (10) of any of claims 9 to 13, wherein the second parameter is a performance parameter and the second sensor includes one or more of: a pressure sensor; a torque sensor; and a temperature sensor.

15. The aircraft engine (10) of any of claims 9 to 13, wherein the second parameter is a lidar parameter and the second sensor is a lidar unit.
